# EUROPEAN PATENT SPECIFICATION

(11) **EP 2 251 566 B1**
(45) Date of publication and mention of the grant of the patent: **20.03.2013**
(21) Application number: 09811329.3
(22) Date of filing: 30.04.2009
(51) Int. Cl.: F03D 11/00, F16H 57/04, F16N 39/04

(54) **SPEED INCREASING GEAR LUBRICATION DEVICE AND METHOD**
VORRICHTUNG UND VERFAHREN ZUR GESCHWINDIGKEITSERHÖHENDEN SCHMIERUNG EINES GETRIEBES
DISPOSITIF ET PROCÉDÉ DE LUBRIFICATION D'ENGRENAGES D'ACCROISSEMENT DE VITESSE

(30) Priority: 03.09.2008 JP 2008225855
(43) Date of publication of application: 17.11.2010
(73) Proprietor: Mitsubishi Heavy Industries, Ltd., Tokyo 108-8215 (JP)
(72) Inventor: YANO, Akihiko, Nagasaki-shi Nagasaki 851-0392 (JP); NODA, Yoshitomo, Nagasaki-shi Nagasaki 851-0392 (JP); YUGE, Atsushi, Nagasaki-shi Nagasaki 851-0392 (JP); OKANO, Yasushi, Nagasaki-shi Nagasaki 850-8610 (JP); TAKAYANAGI, Kazufumi, Nagasaki-shi Nagasaki 850-8610 (JP)
(74) Representative: Intès, Didier Gérard André
(86) International application number: PCT/JP2009/058789
(87) International publication number: WO 2010/026800

(56) References cited:
- WO-A1-2007/006663
- GB-A- 2 201 200
- JP-A- 10 096 463
- JP-A- 2000 210 503
- JP-A- 2008 051 263
- JP-Y2- 7 021 954

## Description

### BACKGROUND OF THE INVENTION

### Field of the Invention

The present invention relates to a lubricating device and a lubricating method for a gearbox, especially for a gearbox used in cold climates.

### Description of the Related Art

Traditionally, frequently used in many industries is a gearbox which comprises an input shaft, an input side gear being rotated by the rotation of the input shaft, and an output side gear meshed with the input side gear and being rotated by the rotation of the input shaft, and in which the rotation of the main shaft is speeded up and outputted to the output shaft via the input side gear and output side gear.

For instance, in a wind turbine of a wind turbine generator, the wind turbine rotates a blade, the main shaft (input shaft) is rotated by the rotation of the blade, the rotation of the main shaft is sped up by the gearbox and transmitted to the output shaft connected to a generator so as to generate electricity (see GB 2201200A, in accordance with the preamble of the independent claims).

In this type of the gearbox, lubricant oil is supplied so as to make the working of the gearbox smooth.

Further, this type of wind turbine is installed both in warm climates and in cold climates.

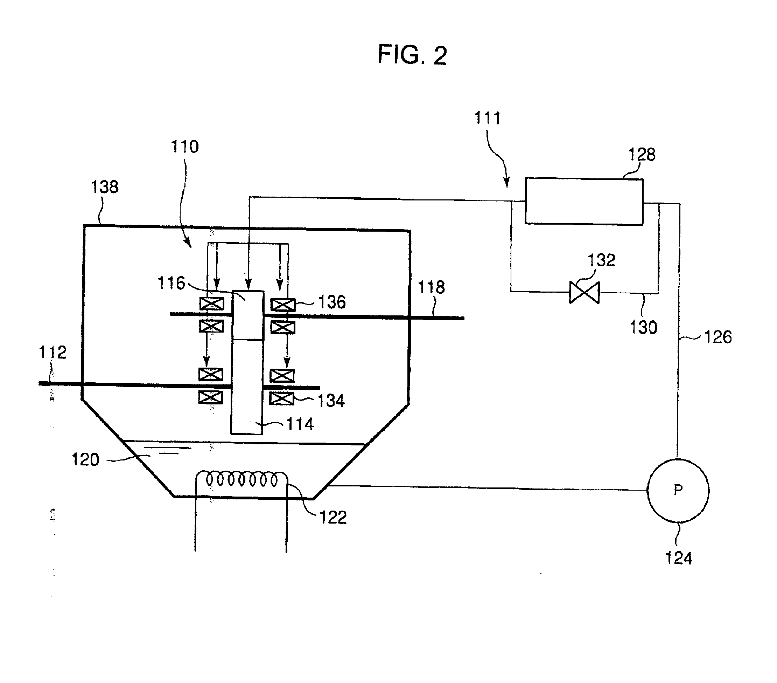

A conventional manner of starting the wind turbine for generating wind power in cold climates is explained in reference to FIG.2.

A gearbox 110 comprises an input shaft 112 being rotated with a blade by wind power, an input side gear 114 being rotated by the rotation of the input shaft 112, an output side gear 116 meshed with the input side gear 114 and being rotated with the rotation of the input side gear, and an output shaft 118 being rotated by the rotation of the output side gear 116 and being connected to the generator not shown in the drawing. An end of the input shaft 112 and an end of the output shaft 118, the input side gear 114, the output side gear 116 are housed in a casing 138. The input shaft 112 is supported rotatably in the casing 138 via bearings 134 and the output shaft 118 is supported rotatably in the casing 138 via bearings 136.

Moreover, along with the gearbox 110, a lubricating device 111 is provided for making the working of the gearbox 110 smooth, which includes an oil pan 120 and a lubricant oil circulating line 126.

The oil pan 120 is arranged at the bottom of the casing 138 such as to store lubricant oil for easing the working of the gearbox 110. Further, a heater 122 is provided in the oil pan 120 for heating the lubricant oil reserved in the oil pan.

The lubricant oil circulating line 126 is a circulating line for supplying the lubricant oil reserved in the oil pan 120 to the gearbox 110. In the lubricant oil circulating line 126, a pump 124, an oil cooler 128, an oil cooler bypass line 130 are arranged. The oil cooler 128 and the oil cooler bypass line are optional.

It is explained below how to start the gearbox 110 and the lubricating device 111 from a low-temperature stopped state (e.g. outside temperature is -30°C).

When the temperature is -30°C outside and the gearbox 110 and the lubricating device 111 are kept in the stopped state, the oil inside the oil pan 120 becomes near -30°C and the lubricant oil of -30°C remains in the lubricant oil circulating line 126 and the oil cooler 128. And it is possible that water in the air within the lubricant oil circulating line 126 is frozen and blocks the circulating line 126. Thus, it is necessary to heat the oil in the oil pan 120 and then circulate the heated oil through the lubricant oil circulating line 126 so as to warm the oil cooler 128 and inside the lubricant oil circulating line 126.

Therefore, before activating the gearbox 110, the lubricant oil reserved in the oil pan 120 is heated by a heater 122. When the heated lubricant oil reaches a predetermined temperature (e.g. a set temperature in the range of 0 to 10°C), the pump 124 is activated and supplies the lubricant oil through the circulating line 126 to the gearbox 110. The lubricant oil supplied to the gearbox 110 falls in the oil pan 120 by gravity.

In this manner, the circulating line 126 and the oil cooler 128 are warmed. Once the circulating line 126 and the oil cooler 128 are warmed sufficiently, the lubricant oil can be supplied to the gearbox 110 in a stable manner and the gearbox is started by rotating the input shaft 112.

The lubricating device of the gearbox is commonly used. For instance, Patent Document 1 (JP10-096463A) discloses this type of a lubricating device.

However, in the conventional lubricating device as shown in FIG.2, the lubricant oil is circulated in such state that the input shaft is not rotated, e.g. neither the input side gear nor output side gear is rotated. The lubricant oil of 0 to 10°C has high kinetic viscosity of 2000 to 8000cST and low bubble separation. Thus, when the lubricant of 0 to 10°C is supplied to the input side gear and output side gear, the lubricant oil splashes and scatters, and then falls into the oil pan with gravity. If the splashing of the lubricant continues, the lubricant oil in the oil pan becomes clouded and a lot of air gets in the lubricant oil.

When the lubricant oil with high air content is circulated, aeration occurs and abnormal noises and vibration are generated from the pump, resulting in decreasing the pump life.

This results from supplying the lubricant oil with high kinetic viscosity to the gearbox including the gears when the gears are not rotated. It is possible to circulate the lubricant oil having been heated by the heater to higher temperature (e.g. 20 to 30°C) instead of 0 to 10°C. However, this is not realistic as it takes comparatively long time to heat the lubricant oil to 20 to 30°C in cold climates.

### SUMMARY OF THE INVENTION

Therefore, in view of the above problems, an object of the present invention is to provide a lubricating device and lubricating method for a gearbox which does not take long to heat the lubricant oil even in cold climates and prevents the air getting in the lubricant oil due to the splashing thereof during the activation of the gearbox.

To achieve the above object, the present invention provides an assembly comprising a gearbox and a lubricating device for the gearbox, as defined in appended claim 1. Such an assembly comprises: a gearbox which includes an input shaft, a group of gears rotated by the rotation of the input shaft, and an output shaft rotated by the rotation of the group of gears, the rotation of the input shaft being speeded up and outputted to the output shaft via the group of gears; an oil storage chamber which stores lubricant oil for lubricating the gearbox; a lubricant oil circulating line which includes a pump and through which the lubricant oil stored in the oil storage chamber is supplied to the gearbox by the pump and then returned to the oil storage chamber; a bypass line which is provided in the oil lubricant circulating line and bypasses the gearbox; and a switching valve which is provided in the oil lubricant circulating line and switches the supply path between supplying the lubricant oil to the gearbox and supplying the lubricant oil to the bypass line.

There is no need to lubricate the gearbox when the main shaft is not rotated and thus the lubricant oil is not supplied to the gearbox while the main shaft is not rotated.

Therefore, the bypass line and the switching valve are provided so as to switch the supply path of the lubricant oil to the gearbox when the main shaft is rotated.

With this, the lubricant oil is not supplied to the gearbox while the main shaft is not rotated and thus the splashing of the lubricant oil with high kinetic viscosity against the gears that are not rotating, does not take place and the air getting mixed in the lubricant oil due to the splashing is prevented.

And while the main shaft is not rotated, the lubricant is circulated via the bypass line and the lubricant oil circulating line can still be warmed.

Moreover, the lubricating device further comprises a control unit which controls the switching valve such that when the input shaft is rotated, the lubricant oil is supplied to the gearbox, and when the input shaft is not rotated, the lubricant oil is supplied to the bypass line.

By using the control unit to control the switching valve to switch the supply path of the lubricant oil, switching of the switching valve is automated and no manual work of switching the supply path is needed. As a result, the air getting mixed in the lubricant oil due to the splashing thereof is prevented with fewer steps.

The lubricating device of the present invention may further comprise another control unit which controls the input shaft to rotate after a set period time has passed since the pump is started.

The set period of time should be not less than the time that is needed to raise the temperature of the lubricant oil high enough to flow smoothly in the lubricant oil circulating line.

After the pump is started, the control unit controls the switching valve to supply the lubricant oil to the bypass line when the main shaft is not rotated, or to the gearbox when the main shaft is rotated.

In this manner, the time that takes from starting the pump to rotating the main shaft is shortened and a prompt activation becomes possible.

Moreover, when the main shaft starts rotating, the group of gears are rotated and the lubricant oil is supplied to the group of gears, thereby raising the temperature of the lubricant oil and making the lubricant oil less prone to splashing. Therefore, the time in which the air is mixed into the lubricant oil becomes shorter, thereby preventing the aeration of the lubricant oil in the pump.

It is also preferable that the lubricating device of the present invention further comprises an orifice arranged in the bypass line.

With the resistance heating of the orifice, when the lubricant oil is supplied to the bypass line, the temperature rise of the lubricant oil circulating in the bypass line is enhanced.

As a method to achieve the above object, the present invention further provides a method for starting a gearbox, as defined in appended claim 5, by supplying lubricant oil stored in an oil storage chamber by a pump to the gear box and then returning the lubricant oil to the oil storage chamber, the gearbox speeding up and outputting the rotation of an input shaft to an output shaft via a group of gears, the method comprising the steps of: circulating the lubricant oil stored in the oil storage chamber by the pump so as to return the lubricant oil to the oil storage chamber while bypassing the gearbox, when the input shaft is not rotated; and after a set period of time has passed since the pump is started, controlling the input shaft to start rotating and switching a supply path from bypassing the gearbox to supplying the lubricant oil to the gearbox and then returning the lubricant oil to the oil storage chamber.

It is also preferable that the pump is started when the input shaft is not rotated, and after a set period of time has passed since the pump is started, the input shaft is controlled so as to start the rotation thereof.

According to the present invention as described above, the lubricating device and lubricating method for a gearbox which does not take long to heat the lubricant oil and prevents the air getting mixed in the lubricant oil due to the splashing thereof during the activation of the gearbox can be obtained.

### BRIEF DESCRIPTION OF THE DRAWINGS

FIG.1 is a schematic view of a lubricating device for a gearbox in a first embodiment.
FIG.2 is a schematic view of a lubricating device for a gearbox in a conventional example.
FIG.3 illustrates a whole structure of a wind turbine of the first embodiment.
FIG.4 is a schematic structure of a nacelle of the first embodiment.

### DETAILED DESCRIPTION OF THE PREFERRED EMBODIMENTS

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

### [First Embodiment]

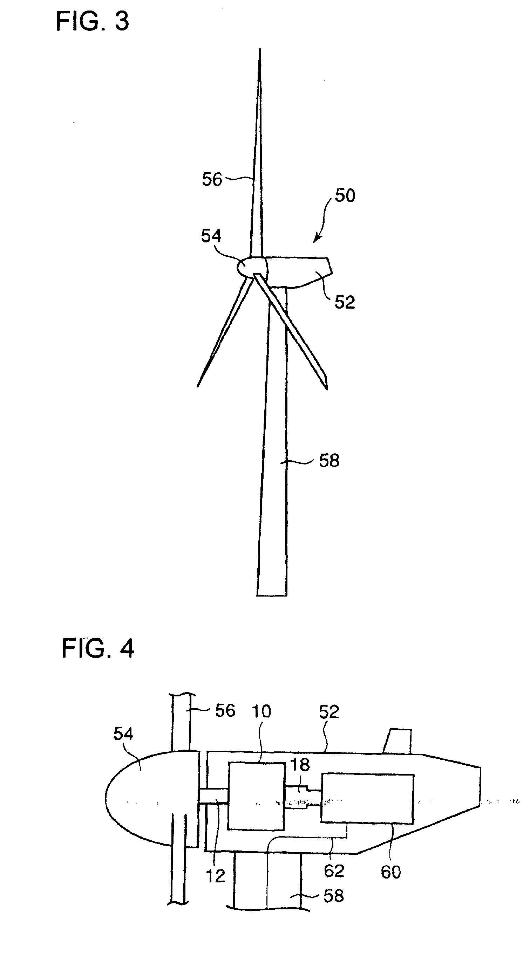

FIG.3 illustrates a whole structure of a wind turbine of a first embodiment and FIG.4 is a schematic structure of a nacelle of the first embodiment. A horizontal axis wind turbine is used in the present embodiment but should not limit a type of a wind turbine thereto.

As shown in FIG.3, a horizontal axis wind turbine 50 of the present embodiment comprises a tower 58, a nacelle 52, a hub 54 and blades 56. The blades 56 are fixed to the hub 54.

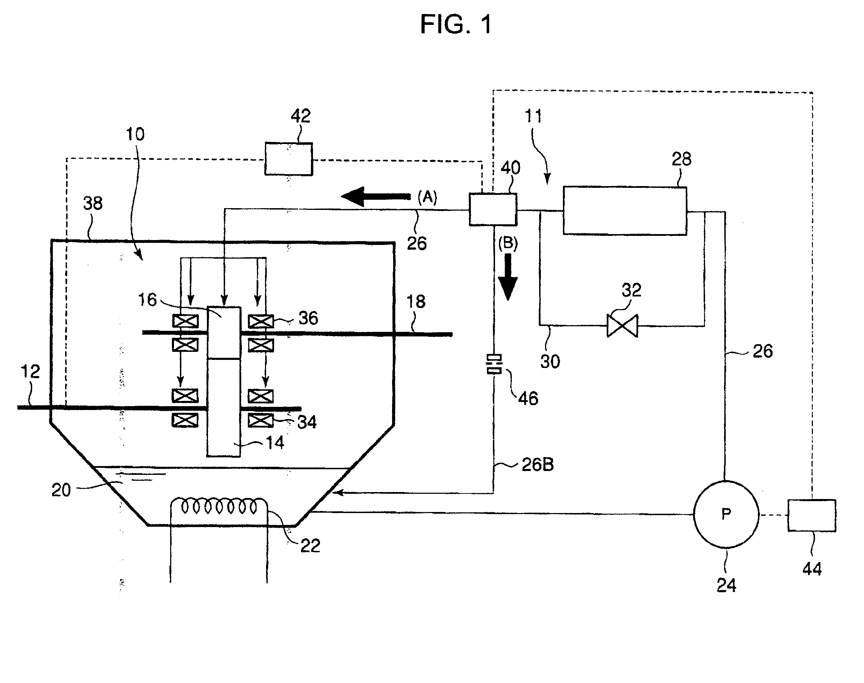

The tower 58 supports the nacelle 52 free of yawing and the nacelle 52 supports pivotally the hub 54 via a main shaft 12 being connected to the hub 54. One end of the main shaft 12 extends out of the nacelle 52 and the hub 54 is fixed to the end of the main shaft so as to rotate together with the main shaft 12. The nacelle 52 houses a gearbox 10, a generator 60, the main shaft 12, an output shaft 18 and ancillary devices not shown in the drawings. In the gearbox 10, a lubricating device (not shown in FIG.1 and FIG.2) is provided to make the working of the gearbox 10 smooth.

In the horizontal axis wind turbine 50 being structured as above, the blades 56 and the hub 54 receive the wind and rotate, and the main shaft 12 being connected to the hub 54 rotates, the rotation of the main shaft 12 is sped up by the gearbox 10 and transmitted to the generator 60 via the output shaft 18, thereby generating electricity. The electricity generated by the generator 60 is supplied to outside source via a cable 62.

The structure of the gearbox 10 used for the horizontal axis wind turbine 50 and the working of the lubricating device in the horizontal axis wind turbine 50 installed in cold climates in the case of starting the device from the state that the wind turbine is not rotated will be described in reference to FIG.1.

FIG.1 is a schematic view of the gearbox and the lubricating device for the gearbox in the first embodiment. The gearbox of the present embodiment is used for the wind turbine for generating wind power in cold climates but not limited thereto.

A gearbox 10 comprises an input shaft 12 being rotated with blades not shown in the drawing by wind power, an input side gear 14 being rotated by the rotation of the input shaft 12, an output side gear 16 meshed with the input side gear 14 and being rotated with the rotation of the input side gear, and an output shaft 18 being rotated by the rotation of the output side gear 16 and being connected to the generator not shown in the drawing. An end of the input shaft 12, an end of the output shaft 18, the input side gear 14, and the output side gear 16 are housed in a casing 38. The input shaft 12 is supported rotatably in the casing 38 via bearings 34 and the output shaft 18 is supported rotatably in the casing 38 via bearings 36.

Moreover, along with the gearbox 10, a lubricating device 11 is provided for making the working of the gearbox 10 smooth, which includes an oil pan 20 and a lubricant oil circulating line 26.

The oil pan 20 is arranged at the bottom of the casing 38 such as to store lubricant oil for easing the working of the gearbox 10. Further, a heater 22 is provided in the oil pan 20 for heating the lubricant oil reserved in the oil pan.

The lubricant oil circulating line 26 is a circulating line for supplying the lubricant oil reserved in the oil pan 20 to the gearbox 10. In the lubricant oil circulating line 26, a pump 24, an oil cooler 28, an oil cooler bypass line 30 are arranged. The oil cooler 28 and the oil cooler bypass line 30 are optional.

Further, a bypass line 26B for bypassing the gearbox 10 and a switching valve 40 for switching a supply path of the lubricant between supplying the lubricant oil to the gearbox and supplying the lubricant oil to the bypass line 26B are provided in the lubricant oil circulating line 26. Furthermore, an orifice 46 is provided in the bypass line 26B.

With the switching valve 40, the lubricant oil can be circulated in two flow circuits described below. Circuit (A) :
oil pan 20→ pump 24→ oil cooler 28 or oil cooler bypass line 30→ switching valve 40→ gearbox 10→ oil pan 20 Circuit (B) :
oil pan 20→ pump 24→ oil cooler 28 or oil cooler bypass line 30→ switching valve 40→ bypass line 268→ oil pan 20

Moreover, a control unit 42 is provided. The control unit 42 detects the rotation status of the input shaft 12 and also controls the switching valve 40 such that when the input shaft 12 is rotated, the bypass line 26B is not used, i.e. the lubricant oil being circulated in the flow circuit (A), and when the input shaft is not rotated, the bypass line 26B is used, i.e. the lubricant oil being circulated in the flow circuit (B).

Furthermore, a second control unit 44 is provided so as to control the input shaft 12 to start rotating after a set period time has passed since the pump 24 is started.

Now, how to start the gearbox 10 and the lubricating device 11 from a low-temperature stopped state (e.g. outside temperature is -30°C) is explained below.

When the temperature is -30°C outside and the gearbox 10 and the lubricating device 11 are kept in the stopped state, the temperature of the oil inside the oil pan 20 becomes near -30°C and the lubricant oil of approximately -30°C remains in the lubricant oil circulating line 26 and the oil cooler 28. And it is possible that water in the air within the lubricant oil circulating line 26 is frozen and blocks the circulating line 26. Thus, it is necessary to heat the oil in the oil pan 20 and then circulate the heated oil through the lubricant oil circulating line 26 so as to warm the oil cooler 28 and inside the lubricant oil circulating line 26.

Therefore, before starting the gearbox 10, the lubricant oil reserved in the oil pan 20 is heated by the heater 22 in a state that the main shaft 12 is not rotated. In this step, the first control unit 42 controls the switching valve 40 so as to supply the lubricant oil to the bypass line 26B.

When the heated lubricant oil reaches a predetermined temperature (e.g. a set temperature in the range of 0 to 10°C), the pump 24 is activated so that the lubricant oil is circulated in the following order; oil pan 20-pump 24 → oil cooler 28→ switching valve 40→ bypass line 263→ oil pan 20.

With this, the lubricant oil circulating line 26 and the oil cooler 28 arranged in the oil circulating line 26 are warmed up. While warming the lubricant oil circulating line 26 and the oil cooler 28, the temperature of the lubricant oil is raised by the resistance heating of the orifice 46 and the pump 24, thereby the warming of the system is performed efficiently.

After a set period of time (e.g. 10 minutes) has passed since the pump 24 is started and the lubricant oil is circulated through the circulating line 26B in the manner described above, the switching valve 40 is automatically switched by the second control unit 44 so as to supply the lubricant oil to the gearbox 10 via the oil pan 20, the pump 24, the oil cooler 28 and the switching valve 40.

When the supply path of the lubricant oil is switched by the switching valve 40, the first control unit 42 detects the switching of the supply path and controls the input shaft 12 so that the input shaft can rotate. Meanwhile, the input shaft 12 is controlled by the first control unit 42 simultaneously with or after the detection of the switching of the supply path by the switching valve 40.

With this, the main shaft 12 is rotated such as to start the gearbox 10, and the lubricant oil is supplied to the gearbox 10 via the oil pan 20, the pump 24, the oil cooler 28 and the switching valve 40. The lubricant oil fed into the gearbox 10 is supplied to the input side gear 14, the output side gear 16, and the bearings 34 and 36, thereby making the working of the gearbox 10 smooth.

Finally, the lubricant oil falls into the oil pan 20 due to the force of gravity.

Specifically, the lubricant oil is circulated in the order of: oil pan 20→ pump 24→ oil cooler 28→ switching valve 40→ gearbox 10→ oil pan 20, thereby making the working of the gearbox 10 smooth.

Moreover, by controlling the switching valve 40 to switch the supply path of the lubricant oil by the first control unit 42, the lubricant oil is not supplied to the gearbox when the main shaft 12 is not rotated, and thus the splashing of the lubricant oil against the gears which are not rotated and the air getting mixed in the lubricant oil due to the splashing are both prevented.

With the lubricating device 11 having the structure described above, the heating of the lubricant no longer takes a long time and the interfusion of air in the lubricant oil due to the splashing is prevented, thereby preventing the aeration in the circulating pump 24 due to the interfusion of air in the lubricant oil.

Further, by adopting the lubricating device 11 having the structure described above in the wind turbine installed in cold climates where the lubricant oil gets cold by the air outside, the aeration in the circulating pump 24 is prevented in the manner described above, and the wind turbine with minimum acoustic noise and the vibration thereof is obtained. As a result, the lubricating system such as the pump is not prone to damage, and the lubricating of the wind turbine in a cold environment is improved and the electricity can be generated in a wider range of the temperature, resulting in improving the power generation efficiency.

### Industrial Applicability

The present invention can be used as a lubricating device and a lubricating method which does not take long to heat the lubricant oil and can prevent the splashing and the air getting mixed in the lubricant oil when starting the wind turbine.

## Claims

1. An assembly comprising a gearbox and a lubricating device for the gearbox, the assembly comprising:
a gearbox (10) which includes an input shaft (12), a group of gears rotated by the rotation of the input shaft, and an output shaft (18) rotated by the rotation of the group of gears, the rotation of the input shaft (12) being speeded up and outputted to the output shaft (18) via the group of gears;
an oil storage chamber which is arranged below the group of gears and stores lubricant oil for lubricating the group of gears;
a lubricant oil circulating line (26) which includes a pump (24) and through which the lubricant oil stored in the oil storage chamber is supplied to the group of gears arranged above the oil storage chamber by the pump (24) and then dropped into the oil storage chamber after lubricating the group of gears so as to return to the oil storage chamber;
the assembly being **characterized in that** it further comprises:
a bypass line (26B) which is provided in the oil lubricant circulating line (26) and bypasses the gearbox (10) ;
a switching valve (40) which is provided in the oil lubricant circulating line (26) and switches a supply path of the lubricant oil between supplying the lubricant oil to the group of gears and supplying the lubricant oil to the bypass line (26B), and a first control unit (42) which controls the switching valve (40) such that when the input shaft (12) is rotated, the lubricant oil is supplied to the group of gears, and when the input shaft (12) is not rotated, the lubricant oil is supplied to the bypass line (26B)

2. The assembly of claim 1, comprising a second control unit (44) which controls the input shaft (12) to rotate after a set period time has passed since the pump (24) is started.

3. The assembly of claims 1 or 2, further comprising an orifice (46) which is arranged in the bypass line (26B) and raises the temperature of the lubricant oil circulating in the bypass line with a resistance heating of the orifice (46).

4. A method for starting a gearbox (10) provided with a lubricating device, in which the rotation of an input shaft (12) is speeded up and outputted to an output shaft (18) via a group of gears, and lubricant oil stored in an oil storage chamber which is arranged below the group of gears is supplied to the group of gears by a pump (24) so as to lubricate the group of gears and then dropped and returned to the oil storage chamber, the method being **characterized in that** it comprises the steps of:
when the input shaft is not rotated, circulating the lubricant oil stored in the oil storage chamber by the pump (24) so as to return the lubricant oil to the oil storage chamber lower than a position of the oil storage chamber to which the lubricant oil is returned when the input shaft is rotated, while bypassing the gearbox (10); and
after a set period of time has passed since the pump (24) is started, controlling the input shaft (12) to start rotating and switching a supply path from bypassing the gearbox (10) to supplying the lubricant oil to the group of gears and then returning the lubricant oil to the oil storage chamber.

5. The method of claim 4, wherein the gearbox (10) is bypassed by means of a bypass line (26B), and wherein the temperature of the lubricant oil circulating in the bypass line (26B) is raised with a resistance heating of an orifice (46) which is arranged in the bypass line (26B).

## Patentansprüche

1. Anordnung, umfassend ein Getriebe und eine Schmiervorrichtung für das Getriebe, wobei die Anordnung umfaßt:
ein Getriebe (10), das eine Antriebswelle (12), eine Gruppe von Antriebsritzeln, die durch die Rotation der Antriebswelle rotiert werden, und eine Abtriebswelle (18), die durch die Rotation der Gruppe von Antriebsritzeln rotiert wird, umfaßt, wobei die Rotation der Antriebswelle (12) über die Gruppe von Antriebsritzeln hochgesetzt und an die Abtriebswelle (18) ausgegeben wird,
eine Ölspeicherkammer, die unter der Gruppe von Antriebsritzeln angeordnet ist und Schmieröl zum Schmieren der Gruppe von Antriebsritzeln speichert,
eine Schmierölzirkulationsleitung (26), die eine Pumpe (24) umfaßt und durch die das in der Ölspeicherkammer gespeicherte Schmieröl mittels der Pumpe (24) der Gruppe von Antriebsritzeln zugeführt wird, die über der Ölspeicherkammer angeordnet sind, und dann nach Schmieren der Gruppe von Antriebsritzeln in die Ölspeicherkammer hinabläuft, um zur Ölspeicherkammer zurückzukehren,
wobei die Anordnung **dadurch gekennzeichnet ist, daß** sie ferner umfaßt:
eine Umgehungsleitung (26B), die in der Schmierölzirkulationsleitung (26) vorgesehen ist und das Getriebe (10) umgeht,
ein Umschaltventil (40), das in der Schmierölzirkulationsleitung (26) vorgesehen ist und einen Zuführweg des Schmieröls zwischen Zuführen des Schmieröls zu der Gruppe von Antriebsritzeln und Zuführen des Schmieröls zu der Umgehungsleitung (26B) umschaltet, und eine erste Steuereinheit (42), die das Umschaltventil (40) so steuert, daß, wenn die Antriebswelle (12) rotiert wird, das Schmieröl der Gruppe von Antriebsritzeln zugeführt wird, und, wenn die Antriebswelle (12) nicht rotiert wird, das Schmieröl der Umgehungsleitung (26B) zugeführt wird.

2. Anordnung nach Anspruch 1, umfassend eine zweite Steuereinheit (44), die die Antriebswelle (12) steuert, damit sie rotiert, wenn eine eingestellte Zeitdauer seit dem Starten der Pumpe (24) vergangen ist.

3. Anordnung nach Anspruch 1 oder 2, ferner umfassend einen Durchlaß (46), der in der Umgehungsleitung (26B) angeordnet ist und der die Temperatur des Schmieröls, das in der Umgehungsleitung zirkuliert, durch Widerstandsheizen des Durchlasses (46) erhöht.

4. Verfahren zum Starten eines Getriebes (10), das mit einer Schmiervorrichtung versehen ist, wobei die Rotation einer Antriebswelle (12) beschleunigt und an eine Abtriebswelle (18) mittels einer Gruppe von Antriebsritzeln ausgegeben wird und wobei in einer Ölspeicherkammer, die unter der Gruppe von Antriebsritzeln angeordnet ist, gespeichertes Schmieröl der Gruppe von Antriebsritzeln mittels einer Pumpe (24) zugeführt wird, um die Gruppe von Antriebsritzeln zu schmieren, und dann hinabläuft und in die Ölspeicherkammer zurückgeführt wird, wobei das Verfahren **dadurch gekennzeichnet ist, daß** es ferner die Schritte umfaßt:
wenn die Antriebswelle nicht rotiert wird, Zirkulieren des in der Ölspeicherkammer gespeicherten Schmieröls mittels der Pumpe (24), so daß das Schmieröl in die Ölspeicherkammer an einer Stelle zurückgeführt wird, die unterhalb einer Stelle in der Ölspeicherkammer liegt, an der das Öl zurückgeführt wird, wenn die Antriebswelle rotiert wird, während das Getriebe (10) umgangen wird, und
wenn eine eingestellte Zeitdauer seit dem Starten der Pumpe (24) vergangen ist, Steuern der Antriebswelle (12), so daß sie zu rotieren beginnt, und Umschalten eines Zuführwegs von Umgehen des Getriebes (10) auf Zuführen des Schmieröls zu der Gruppe von Antriebsritzeln und dann Zurückführen des Schmieröls in die Ölspeicherkammer.

5. Verfahren nach Anspruch 4, wobei das Getriebe (10) mittels einer Umgehungsleitung (26B) umgangen wird, und wobei die Temperatur des Schmieröls, das in der Umgehungsleitung (26B) zirkuliert, durch Widerstandserhitzen eines Durchlasses (46), der in der Umgehungsleitung (26B) angeordnet ist, erhöht wird.

## Revendications

1. Ensemble comprenant une boîte de vitesses et un dispositif de lubrification pour la boîte de vitesses, l'ensemble comprenant :
une boîte de vitesses (10) qui comprend un arbre d'entrée (12), un groupe d'engrenages entraînés en rotation par la rotation de l'arbre d'entrée, et un arbre de sortie (18) entraîné en rotation par la rotation du groupe d'engrenages, la rotation de l'arbre d'entrée (12) étant accélérée et transmise à l'arbre de sortie (18) via le groupe d'engrenages ;
une chambre de stockage d'huile qui est agencée au-dessous du groupe d'engrenages et stocke l'huile de lubrification pour lubrifier le groupe d'engrenages ;
une conduite de circulation d'huile de lubrification (26) qui comprend une pompe (24) et à travers laquelle l'huile de lubrification stockée dans la chambre de stockage d'huile est amenée jusqu'au groupe d'engrenages agencé au-dessus de la chambre de stockage d'huile par la pompe (24) et tombe ensuite dans la chambre de stockage d'huile après avoir lubrifié le groupe d'engrenages afin de revenir dans la chambre de stockage d'huile ;
l'ensemble étant **caractérisé en ce qu'**il comprend en outre :
une conduite de dérivation (26B) qui est prévue dans la conduite de circulation d'huile de lubrification (26) et qui contourne la boîte de vitesses (10) ;
une valve de commutation (40) qui est prévue dans la conduite de circulation d'huile de lubrification (26) et commute une trajectoire d'alimentation de l'huile de lubrification entre l'alimentation de l'huile de lubrification vers le groupe d'engrenages et l'alimentation de l'huile de lubrification vers la conduite de dérivation (26B), une première unité de commande (42) qui commande la valve de commutation (40) de sorte que lorsque l'arbre d'entrée (12) est entraîné en rotation, l'huile de lubrification est amenée jusqu'au groupe d'engrenages, et lorsque l'arbre d'entrée (12) ne tourne pas, l'huile de lubrification est amenée vers la conduite de dérivation (26B).

2. Ensemble selon la revendication 1, comprenant une seconde unité de commande (44) qui commande la rotation de l'arbre d'entrée (12) après qu'une période de temps déterminée s'est écoulée depuis le démarrage de la pompe (24).

3. Ensemble selon les revendications 1 ou 2, comprenant en outre un orifice (46) qui est agencé dans la conduite de dérivation (26B) et fait monter la température de l'huile de lubrification circulant dans la conduite de dérivation avec un chauffage par résistance de l'orifice (46).

4. Procédé pour démarrer une boîte de vitesses (10) dotée d'un dispositif de lubrification, dans lequel la rotation d'un arbre d'entrée (12) est accélérée et transmise à un arbre de sortie (18) via un groupe d'engrenages, et l'huile de lubrification stockée dans une chambre de stockage d'huile qui est agencée au-dessous du groupe d'engrenages est amenée jusqu'au groupe d'engrenages par une pompe (24) afin de lubrifier le groupe d'engrenages et tombe ensuite et revient vers la chambre de stockage d'huile, le procédé étant **caractérisé en ce qu'**il comprend les étapes consistant à :
lorsque l'arbre d'entrée ne tourne pas, faire circuler l'huile de lubrification stockée dans la chambre de stockage d'huile par la pompe (24) afin de ramener l'huile de lubrification vers la chambre de stockage d'huile à une position plus basse que la position à laquelle l'huile de lubrification revient dans la chambre de stockage d'huile lorsque l'arbre d'entrée tourne, tout en contournant la boîte de vitesses (10) ; et
après qu'une période de temps déterminée s'est écoulée depuis le démarrage de la pompe (24), commander l'arbre d'entrée (12) pour commencer la rotation et commuter une trajectoire d'alimentation depuis le contournement de la boîte de vitesses (10) jusqu'à l'alimentation du groupe d'engrenages l'huile de lubrification et ramener ensuite l'huile de lubrification dans la chambre de stockage d'huile.

5. Procédé selon la revendication 4, dans lequel la boîte de vitesses (10) est contournée au moyen d'une conduite de dérivation (26B), et dans lequel la température de l'huile de lubrification circulant dans la conduite de dérivation (26B) est augmentée avec un chauffage par résistance d'un orifice (46) qui est agencé dans la conduite de dérivation (26B).
